# EUROPÄISCHE PATENTSCHRIFT

(11) **EP 0 606 541 B1**
(45) Veröffentlichungstag und Bekanntmachung des Hinweises auf die Patenterteilung: **02.01.1997**
(21) Anmeldenummer: 93117055.9
(22) Anmeldetag: 21.10.1993
(51) Int. Cl.: A01C 7/12

(54) **Dosiervorrichtung für eine Sämaschine**
Dosing device for a seed drill
Dispositif de dosage pour un semoir

(30) Priorität: 15.01.1993 DE 9300439 U
(43) Veröffentlichungstag der Anmeldung: 20.07.1994
(73) Patentinhaber: RABEWERK BERNBURG GmbH & Co., 06406 Bernburg (DE)
(72) Erfinder: Ballmer, Ernst, Dipl.-Ing., D-06406 Bernburg (DE); Rusch, Uwe, Dipl.-Ing., D-06406 Bernbrug (DE)
(74) Vertreter: Missling, Arne, Dipl.-Ing.

(56) Entgegenhaltungen:
- DE-A- 3 723 495
- US-A- 2 017 759
- US-A- 2 975 936

## Beschreibung

Die Erfindung betrifft eine Dosiereinrichtung für eine Sämaschine mit einem Särad, welches mehrere Nocken aufweist, welche eine mit einer Ausnehmung versehene Fläche für die Aufnahme eines Samenkorns für eine Feinsaat aufweisen.

Die DE-OS 37 23 495, welche alle Merkmale des Oberbegriffes zeigt, beschreibt einen Säapparat für Normal- und Feinsaat mit einem Särad, welches mit einer Vielzahl von Nocken versehen ist. Die Nocken weisen eine im wesentlichen radiale Fläche auf, welche für die Normalsaat verwendet wird, sowie eine schräg angeordnete Seite, welche mit einer Mulde versehen ist, um für die Feinsaat jeweils ein Samenkorn aufzunehmen.

Bei dem Säverfahren der Oberaussaat, wie z. B. nach der genannten Offenlegungsschrift, ist es erforderlich, feinkörnige Sämereien so zu vereinzeln, daß die Samenkörner jeweils separat abgelegt werden können. Die in dem bekannten Särad vorgesehenen Mulden sind so ausgestaltet, daß sie jeweils nur ein Samenkorn aufnehmen. Die Form des Nocken soll dazu dienen, überschüssige Körner beim Heraustauchen der Nocke aus dem Saatgut leicht abrollen zu lassen. In der Praxis erweist sich ein derartiges Särad jedoch nicht als zuverlässig, da sich, in Abhängigkeit von der Neigung des das Särad aufnehmenden Gehäuses, unterschiedliche Winkelverhältnisse der mit der Mulde versehenen Seite des Nocken ergeben. Diese Unterschiede treten insbesondere dann auf, wenn die Sämaschine bergauf oder bergab fährt, da sich dann der Saatgutspiegel relativ zur Achse des Särades bzw. zu dessen Scheitelpunkt ändert. Hieraus ergibt sich der nachteilige Effekt, daß zusätzliche Körner mitgeführt werden können, welche sich beispielsweise an dem in der Mulde liegenden Saatkorn abstützen. Es ergibt sich somit in ungewollter Weise eine höhere Fördermenge, wenn die Sämaschine bergauf fährt. Bei einer Bergabfahrt kann der gegenteilige Effekt auftreten, da der Saatgutspiegel relativ zu dem Särad tiefer liegt. Hierdurch können die Samenkörner aus den Mulden herausrollen, so daß sich in unerwünschter Weise eine zu niedrige Förderrate ergibt.

Die DE-PS 251 499 beschreibt eine Sämaschine, bei welcher das Särad mit löffelartigen Ansätzen versehen ist. Durch die unterschiedlichen Drehrichtungen des Särades werden unterschiedliche Fördermengen für eine Normalsaat bzw. eine Feinsaat ermöglicht. Nachteilig ist herbei, daß der bei einer Oberaussaat wirkende Querschnitt genauso groß ist wie der für eine Unteraussaat wirksame Querschnitt der Ansätze des Särades. Dies führt dazu, daß in der Feinsaat-Drehrichtung des Särades nicht sichergestellt ist, daß jeweils nur einzelne Samenkörner gefördert werden.

Der Erfindung liegt die Aufgabe zugrunde, eine Dosiereinrichtung der eingangs genannten Art zu schaffen, welche bei einfachem Aufbau und einfacher und betriebssicherer Anwendbarkeit die gezielte Ausbringung einzelner Samenkörner auch unter unterschiedlichen Arbeitsbedingungen ermöglicht.

Erfindungsgemäß wird die Aufgabe dadurch gelöst, daß, in der zur Ausbringung von Feinsaat vorgesehenen Drehrichtung des Särades, vor der Ausnehmung zur Aufnahme eines Samenkorns eine Auflaufschräge angeordnet ist, welche mit abgeschrägten Flanken versehen ist.

Die erfindungsgemäße Dosiereinrichtung zeichnet sich durch eine Reihe erheblicher Vorteile aus. Durch die erfindungsgemäß vorgesehene Ausgestaltung der Auflaufschräge ergibt sich eine dachartige Konfiguration. Dies führt dazu, daß einzelne Samenkörner leichter zu den beiden Seiten des Nocken hin abrollen können, während das in der Ausnehmung oder Mulde befindliche Korn sicher gehalten ist. Es besteht durch die seitlichen Flanken nicht die Gefahr, daß weitere Samenkörner durch das in der Ausnehmung befindliche Samenkorn gehalten bzw. abgestützt werden. Zusätzlich ergibt sich ein besserer Füllungsgrad der einzelnen Ausnehmungen, insbesondere auch dann, wenn die Sämaschine bergab fährt.

In einer günstigen Weiterbildung der Erfindung ist vorgesehen, daß die Auflaufschräge eine mittige Bahn aufweist, an welche die Flanken angrenzen. Die mittige Bahn erleichtert das Einbringen des Samenkorns in die Ausnehmung. Weiterhin ist es günstig, wenn sich an die Ausnehmung eine die ganze Breite des Nocken einnehmende hintere Wandung anschließt. Diese führt zu einer sicheren hinteren Abstützung des Samenkorns in der Ausnehmung und verhindert, daß sich an der Rückseite des Samenkorns in unerwünschter Weise weitere Samenkörner abstützen.

Die Auflaufschräge ist in günstiger Weise gradlinig ausgebildet, es ist jedoch auch möglich, diese bogenförmig oder in sonstiger Weise zu gestalten.

Besonders günstig ist es, wenn die Auflaufschräge in einem Winkelbereich zwischen einer zum Särad radialen Anordnung und einer zum Zylindermantel des Särad tangentialen Anordnung ausgerichtet ist. Die Auflaufschräge kann somit, innerhalb dieses Winkelbereichs, beliebig ausgerichtet werden, so daß das Särad den jeweiligen Anwendungsgebieten entsprechend ausgestaltet werden kann.

Die Ausnehmung kann erfindungsgemäß in unterschiedlicher Weise ausgebildet sein, beispielsweise in Form einer konkaven Mulde oder einer axialen Kerbe. Bei einer axialen Kerbe kann diese einen teilkreisförmigen Querschnitt aufweisen und sich über die gesamte Breite des Nocken erstrecken. Im letzteren Falle sind bevorzugterweise seitliche Abdeckungen vorgesehen, um ein unerwünschtes Herausrollen des Samenkorns zu vermeiden. Derartige seitliche Abdeckungen können beispielsweise in Form von Zungen gebildet werden, welche Bestandteil der Abdeckungen sind, die für die Oberaussaat auf die Dosierräder aufgesteckt werden.

Erfindungsgemäß ist es möglich, das Dosierrad so auszubilden, daß dieses in beide Drehrichtungen drehbar ist, so daß es, zusätzlich zu der beschriebenen Feinsaat, auch für Normalsaat verwendet werden kann, sowie dies beispielsweise auch aus der DE-OS 37 23 495 bekannt ist.

Nachfolgend wird die Erfindung anhand von Ausführungsbeispielen in Verbindung mit der Zeichnung beschrieben. Dabei zeigt:
- Fig. 1: eine schematische Seitenansicht eines erfindungsgemäß ausgebildeten Särades,
- Fig. 2: eine Detailansicht des Details C von Fig. 1,
- Fig. 3: eine Schnittansicht in Blickrichtung A gemäß Fig. 1,
- Fig. 4: eine vergrößerte Schnittansicht gemäß Blickrichtung B von Fig. 1,
- Fig. 5: eine Seitenansicht, ähnlich Fig. 1, einer weiteren Ausführungsform eines Särades,
- Fig. 6: eine Detailansicht gemäß Detail D von Fig. 5,
- Fig. 7: eine Teil-Seitenansicht der erfindungsgemäßen Dosiereinrichtung unter Verwendung eines Särades gemäß Fig. 1,
- Fig. 8: eine vergrößerte Teil-Schnittansicht eines weiteren Ausführungsbeispiels eines Särades in einer Darstellung analog Fig. 4,
- Fig. 9: eine Teil-Schnittansicht in einer Darstellung entsprechend der Blickrichtung E von Fig. 7, und
- Fig. 10: eine Seitenansicht einer bei dem Ausführungsbeispiel der Fig. 7 gezeigten Abdeckung.

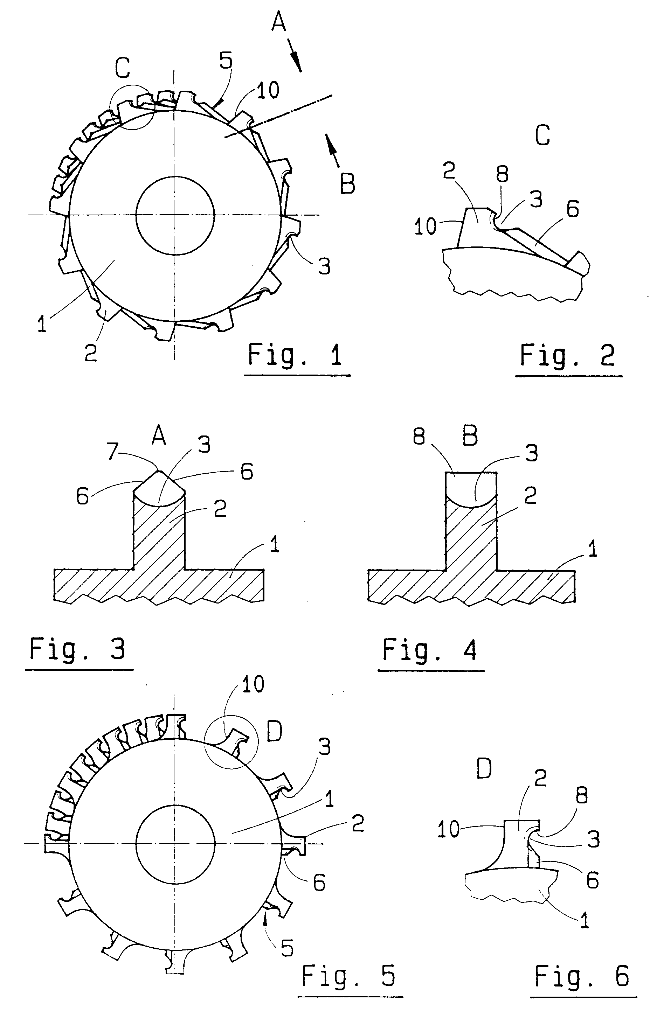

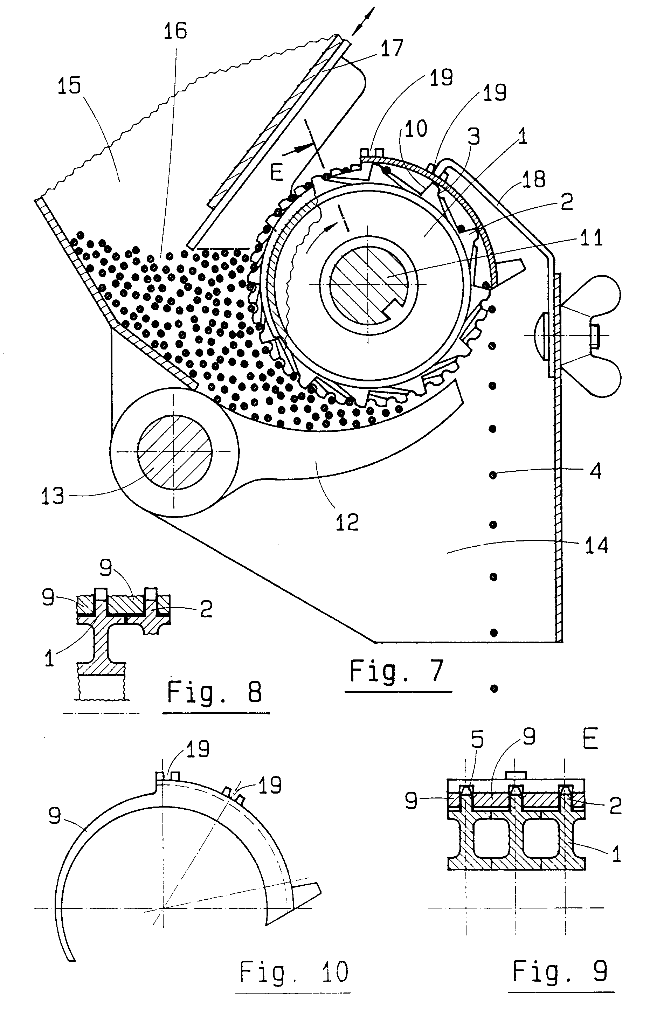

Das in den Fig. 1 und 5 gezeigte Särad 1 ist, wie aus dem Stand der Technik bekannt, zusammen mit weiteren Särädern verdrehsicher auf einer Welle 11 gelagert und befindet sich oberhalb einer Bodenklappe 12, welche um eine Achse 13 schwenkbar ist, welche wiederum in einem Gehäuse 14 gelagert ist. Die Fig. 7 zeigt weiterhin eine Teilansicht eines Saatgutbehälters 15, an dessen bodenseitiger Austrittsöffnung 16 ein Schieber 17 gelagert ist. Das Gehäuse 14 lagert weiterhin eine verschraubbar an dem Gehäuse 14 befestigte Rastfeder 18, welche in Rastausnehmungen 19 einer Abdeckung 9 (s. Fig. 10) einsetzbar ist. Insofern entspricht der Aufbau dem Stand der Technik.

Wie aus Fig. 7 ersichtlich ist, dreht sich das Särad 1 für die Feinsaat in Uhrzeigerichtung, wodurch am Umfang des Särades 1 vorgesehene Nocken 2 durch das oberhalb der Bodenklappe 12 befindliche Saatgut geführt werden, sodaß einzelne Samenkörner 4 jeweils in eine Ausnehmung 3 des Nocken 2 einlegbar sind. Die Abdeckung 9 stellt hierbei eine sichere Halterung und Führung der einzelnen Samenkörner 4 sicher.

Erfindungsgemäß weist jeder Nocken 2 ein in Drehrichtung vor der Ausnehmung 3 angeordnetes Leitteil (Auflaufschräge) 5 auf, welches, wie aus Fig. 3 ersichtlich ist, eine im wesentlichen ebene mittige Bahn 7 sowie daran angrenzende seitliche Flanken 6 umfaßt. Die einzelnen Samenkörner 4 rollen somit, abgesehen von dem in der Ausnehmung 3 aufgenommen Samenkorn 4 von der Auflaufschräge 5 und den Flanken 6 ab, wenn das Särad 1 den jeweiligen Nocken 2 aus dem Saatgut herausbewegt.

Die Darstellung der Fig. 1 bis 6 zeigt, daß die Mulde konkav ausgebildet ist und rückseitig durch eine Wandung 8 begrenzt wird. Auf der der Auflaufschräge 5 gegenüberliegenden Seite weist der Nocken eine Fläche 10 auf, welche für eine Normalsaat (bei Drehung des Särades 1 in Gegenuhrzeigerichtung) verwendbar ist.

Die in den Fig. 1 und 2 bzw. 5 und 6 gezeigten Ausführungsbeispiele unterscheiden sich hinsichtlich der Neigung der Auflaufschräge 5. Diese ist bei dem Ausführungsbeispiel der Fig. 1 und 2 annähernd tangential zum Außenumfang des Särades 1 angeordnet, während sie bei dem Ausführungsbeispiel der Fig. 5 und 6 annähernd radial ausgerichtet ist.

Aus der Fig. 7 ergibt sich, daß insbesondere bei einer Bergfahrt der Sämaschine das Einlegen eines einzigen Samenkorns 4 in die Ausnehmung 3 erleichtert wird, da die restlichen Samenkörner über die seitlichen Flanken 6 abrollen und da keine Gefahr besteht, daß sich an dem in der Ausnehmung 3 befindlichen Samenkorn 4 weitere, unerwünschte Samenkörner stützen. Demgegenüber besteht im Vergleich hierzu bei der Ausführung nach der DE-OS 37 23 495 die erhebliche Gefahr, daß das jeweilige Samenkorn über die vertiefte Mulde hinwegrollt, so daß diese leerbleibt und kein Samenkorn transportiert. Der Vergleich der Darstellungen der Fig. 3 und 4 ergibt, daß in der Mulde 3 aufgenommenes Samenkorn 4 durch die Wandung 8 sicher abgestützt wird, so daß ein nachträgliches Herausrollen verhindert wird. Demgegenüber ergibt sich bei dem aus der oben genannten Offenlegungsschrift gezeigten Särad bei Bergauffahrt ein Füllungsgrad von größer 1, während er bei Bergabfahrt kleiner 1 ist. Demgegenüber kann erfindungsgemäß eine sichere Füllung der Ausnehmung 3 bei unterschiedlichsten Betriebsbedingungen gewährleistet werden.

Die Fig. 7 bis 9 zeigen ein weiteres Ausführungsbeispiel, bei welchem die Ausnehmung 3 nicht in Form einer Mulde, sondern in Form einer sich axial durch den Nocken erstreckenden Kerbe ausgebildet ist. Um ein seitliches Herausrollen des Samenkorns 4 zu vermeiden, sind seitliche, feststehende Abdeckungen 9 vorgesehen, S. Fig. 8 und 9. Es wird somit jedes einzelne Samenkorn 4 auch seitlich unterstützt und gehalten.

Die Erfindung ist nicht auf die gezeigten Ausführungsbeispiele beschränkt, vielmehr ergeben sich im Rahmen der Ansprüche vielfältige Abwandlungs- und Modifikationsmöglichkeiten.

## Patentansprüche

1. Dosiereinrichtung für eine Sämaschine mit einem Särad (1), welches mehrere Nocken (2) aufweist, welche eine mit einer Ausnehmung (3) versehene Fläche für die Aufnahme eines Samenkorns (4) für eine Feinsaat aufweisen, dadurch gekennzeichnet, daß, in der zur Ausbringung von Feinsaat vorgesehenen Drehrichtung des Särades (1), vor der Ausnehmung (3) ein Leitteil (5) angeordnet ist, welches mit abgeschrägten Flanken (6) versehen ist.

2. Dosiereinrichtung nach Anspruch 1, dadurch gekennzeichnet, daß das Leitteil (5) in Form einer Auflaufschräge ausgebildet ist.

3. Dosiereinrichtung nach Anspruch 2, dadurch gekennzeichnet, daß das Leitteil (5) eine mittige Bahn (7) aufweist, die scharfkantig, abgerundet oder flächig sein kann, an welche die Flanken (6) angrenzen.

4. Dosiereinrichtung nach einem der Ansprüche 1 bis 3, dadurch gekennzeichnet, daß sich an die Ausnehmung (3) eine die ganze Breite des Nocken (2) einnehmende hintere Wandung (8) anschließt.

5. Dosiereinrichtung nach einem der Ansprüche 1 bis 4, dadurch gekennzeichnet, daß das Leitteil (5) gradlinig ausgebildet ist.

6. Dosiereinrichtung nach einem der Ansprüche 1 bis 5, dadurch gekennzeichnet, daß das Leitteil (5) in einem Winkelbereich zwischen einer zum Särad (1) radialen Anordnung und einer zum Zylindermantel des Särads (1) tangentialen Anordnung ausgerichtet ist.

7. Dosiereinrichtung nach einem der Ansprüche 1 bis 6, dadurch gekennzeichnet, daß die Ausnehmung (3) in Form einer konkaven Mulde ausgebildet ist.

8. Dosiereinrichtung nach einem der Ansprüche 1 bis 6, dadurch gekennzeichnet, daß die Ausnehmung (3) in Form einer axialen Kerbe ausgebildet ist.

9. Dosiereinrichtung nach einem der Ansprüche 1 bis 8, dadurch gekennzeichnet, daß die Kerbe einen teilkreisförmigen Querschnitt aufweist.

10. Dosiereinrichtung nach Anspruch 8 oder 9, dadurch gekennzeichnet, daß zur seitlichen Begrenzung der Kerbe angrenzend an das Särad Abdeckungen angebracht sind.

11. Dosiereinrichtung nach einem der Ansprüche 1 bis 10, dadurch gekennzeichnet, daß das Särad (1) für Normalsaat und Feinsaat in beiden Drehrichtungen drehbar ist und daß der Nocken (2) eine glatte, dem Leitteil (5) gegenüberliegende Fläche (10) für Normalsaat aufweist.

## Claims

1. A metering device for a seed drill with a seeding wheel (1) comprising a plurality of cams (2) each comprising a face provided with a recess (3) for receiving a grain of seed (4) for fine seeds, **characterized in that**, in the direction of rotation of the seeding wheel (1) provided for ejecting fine seeds, a guide part (5) provided with bevelled flanks (6) is arranged in front of the recess (3).

2. A metering device according to Claim 1, **characterized in that** the guide part (5) is constructed in the form of a run-up slope.

3. A metering device according to Claim 2, **characterized in that** the guide part (5) has a central path (7) which can be angular, rounded or flat and which is bordered by the flanks (6).

4. A metering device according to one of Claims 1 to 3, **characterized in that** a rear wail (8) occupying the entire width of the cam (2) adjoins the recess (3).

5. A metering device according to one of Claims 1 to 4, **characterized in that** the guide part (5) is constructed in a straight line.

6. A metering device according to one of Claims 1 to 5, **characterized in that** the guide part (5) is orientated within an angular range between an arrangement radial to the seeding wheel (1) and an arrangement tangential to the cylindrical casing of the seeding wheel (1).

7. A metering device according to one of Claims 1 to 6, **characterized in that** the recess (3) is constructed in the form of a concave hollow.

8. A metering device according to one of Claims 1 to 6, **characterized in that** the recess (3) is constructed in the form of an axial notch.

9. A metering device according to one of Claims 1 to 8, **characterized in that** the notch has an arcuate cross-section.

10. A metering device according to Claim 8 or 9, **characterized in that** covers are attached adjacent the seeding wheel in order to bound the notch laterally.

11. A metering device according to one of Claims 1 to 10, **characterized in that** the seeding wheel (1) is rotatable in both directions for normal seeds and for fine seeds, and the cam (2) has a smooth face (10) - opposite the guide part (5) - for normal seeds.

## Revendications

1. Dispositif de dosage pour un semoir pourvu d'une roue de semoir (1) présentant plusieurs ergots (2), qui présentent eux-mêmes une surface avec un évidement (3) destiné à recevoir un grain de semence (4) pour une semence fine,
caractérisé en ce qu'une partie de guidage (5) présentant des flancs inclinés (6), est disposée en avant de l'évidement (3), dans le sens de rotation de la roue de semoir (1) qui est prévu pour le débit de semence fine.

2. Dispositif de dosage suivant la revendication 1, caractérisé en ce que la partie de guidage (5) est réalisée sous la forme d'un biseau d'entraînement.

3. Dispositif de dosage suivant la revendication 2, caractérisé en ce que la partie de guidage (5) présente une piste centrale (7) qui peut être à arêtes vives, être arrondie ou être plane, et qui, en limite, se raccorde aux flancs (6).

4. Dispositif de dosage suivant l'une des revendications 1 à 3, caractérisé en ce qu'une cloison arrière (8), occupant toute la largeur de l'ergot (2), se raccorde à l'évidement (3).

5. Dispositif de dosage suivant l'une des revendications 1 à 4, caractérisé en ce que la partie de guidage (5) est réalisée rectiligne.

6. Dispositif de dosage suivant l'une des revendications 1 à 5, caractérisé en ce que la partie de guidage (5) a, dans un secteur angulaire, une direction comprise entre une disposition radiale par rapport à la roue de semoir (1) et une disposition tangente à la surface externe cylindrique de la roue de semoir (1).

7. Dispositif de dosage suivant l'une des revendications 1 à 6, caractérisé en ce que l'évidement (3) est réalisé sous la forme d'une gorge concave.

8. Dispositif de dosage suivant l'une des revendications 1 à 6, caractérisé en ce que l'évidement (3) est réalisé sous la forme d'une encoche axiale.

9. Dispositif de dosage suivant l'une des revendications 1 à 8, caractérisé en ce que l'encoche présente une section de forme en partie circulaire.

10. Dispositif de dosage suivant la revendication 8 ou la revendication 9, caractérisé en ce que, pour délimiter latéralement l'encoche, des capotages sont prévus en limite de la roue de semoir.

11. Dispositif de dosage suivant l'une des revendications 1 à 10, caractérisé en ce que la roue de semoir (1) peut tourner dans les deux sens, pour semence normale et pour semence fine, et en ce que l'ergot (2) présente une surface lisse (10), située à l'opposé de la partie de guidage (5), pour semence normale.
